(19) Europäisches Patentamt
European Patent Office
Office européen des brevets

(11) **EP 2 648 112 A1**

(12) **DEMANDE DE BREVET EUROPEEN**

(43) Date de publication:
**09.10.2013 Bulletin 2013/41**

(51) Int Cl.:
***G06F 17/14*** *(2006.01)*   ***G01C 21/16*** *(2006.01)*

(21) Numéro de dépôt: **13161877.9**

(22) Date de dépôt: **29.03.2013**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **06.04.2012 FR 1201033**

(71) Demandeur: **Thales**
**92200 Neuilly Sur Seine (FR)**

(72) Inventeurs:
• **De Ligny, Paul**
  **78960 Voisins le Bretonneux (FR)**
• **Chollet, Eddy**
  **26027 Valence Cedex (FR)**

(74) Mandataire: **Brunelli, Gérald et al**
**Marks & Clerk France**
**Immeuble Visium**
**22, avenue Aristide Briand**
**94117 Arcueil Cedex (FR)**

(54) **Système et procédé de traitement d'un signal reçu d'un microsystème électromécanique.**

(57) Système de traitement d'un signal reçu d'un microsystème électromécanique comprenant, des moyens (301) d'échantillonnage dudit signal reçu à une fréquence d'échantillonnage ($F_e$), des moyens (302) de décalage en fréquence d'un signal échantillonné, par multiplication dudit signal échantillonné par une fonction exponentielle complexe, des moyens (303) de filtrage passe-bas du signal décalé en fréquence et des moyens (304) de sous-échantillonnage dudit signal filtré.

FIG.3

EP 2 648 112 A1

**Description**

La présente invention concerne un dispositif de traitement d'un signal reçu d'un microsystème électromécanique. Ce signal reçu est caractérisé par une largeur de la bande d'étalement des fréquences ($\pm\Delta F/2$) et une fréquence centrale ($F_0$) de la bande d'étalement des fréquences.

Les microsystèmes électromécaniques connus aussi sous l'acronyme anglais de MEMS pour « MicroElectroMechanical Systems », sont conçus comme des capteurs oscillants (ou vibrants) qui permettent de mesurer différentes grandeurs physiques comme la force ou l'accélération, l'angle de rotation ou la vitesse angulaire, la pression, la température, mais également des grandeurs chimiques comme la détection d'une substance, le dosage ou la concentration.

Dans l'état de la technique, un microsystème électromécanique est constitué d'un résonateur dont la vibration à sa fréquence de résonance est entretenue par un apport continu d'énergie. Il comporte aussi un circuit de détection permettant la mise en forme du signal, la sortie du microsystème électromécanique est alors un signal électrique dont l'amplitude et/ou la fréquence contiennent l'information de mesure recherchée. De plus, dans le cas d'un microsystème électromécanique très précis (typiquement une précision supérieure à $10^{-4}$ de la pleine échelle), il est nécessaire d'exploiter l'amplitude et la phase du signal. Le signal issu du microsystème électromécanique occupe une bande d'étalement des fréquences de largeur $\pm\Delta F/2$ autour d'une fréquence centrale $F_0$. Afin respecter le théorème de Shannon, la fréquence d'échantillonnage du signal doit être égale ou supérieure au double de la fréquence maximale contenue dans ce signal soit $F_e \geq 2(F_0 + \frac{\Delta F}{2})$.

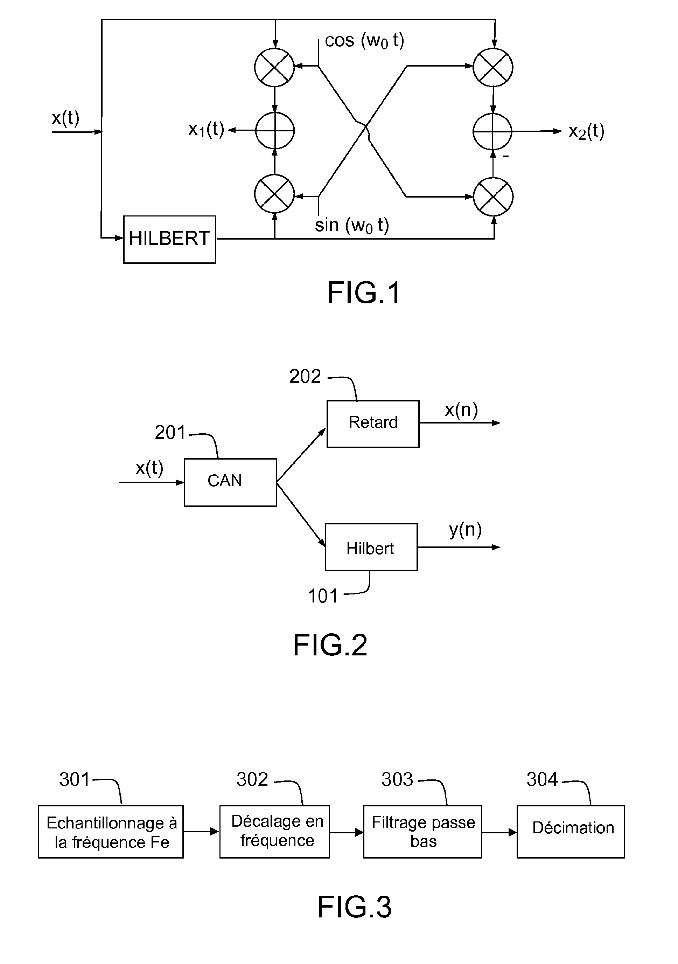

Il est connu dans l'état de la technique un système, tel que décrit figure 1, de traitement du signal reçu $x(t)$ d'un microsystème électromécanique. Ce système comportant un dispositif 101 de filtrage de Hilbert. Or ce type de filtre demande une puissance de calcul importante. C'est un déphaseur pur qui doit conserver la phase dans toute la bande utile du signal. D'autre part, l'ondulation dans la bande du filtre doit être extrêmement faible (par exemple une ondulation typique dans la bande de $10^{-7}$). En conséquence, la réalisation est basée sur un filtre à réponse impulsionnelle finie, connu également sous l'acronyme anglais de FIR pour Finite Impulse Response. Ce filtre ayant un nombre de coefficients très important et une dynamique de calcul très élevée. Ces filtres ayant un nombre typique de coefficients de 128, codés sur 35 bits signés. La dynamique typique étant de 71 bits signés. Le système comporte également un dispositif 102 de génération d'un signal sinusoïdal de fréquence $F_0$ et un dispositif 103 de génération d'un signal sinusoïdal de fréquence $F_0$ en quadrature avec le signal généré par le dispositif 102. Le système comporte aussi des dispositifs 104 de multiplication de signaux et des dispositifs 105 de soustraction de signaux. Les signaux, en sortie du système, $x_1(t)$ et $x_2(t)$ sont connus sous le nom de composantes en quadrature de phase et ils contiennent toutes les informations du signal x(t) mais ramenées en bande de base. On peut d'ailleurs reconstituer exactement le signal x(t) en utilisant la formule suivante :

$$x(t) = x_1(t)\cos(2\pi F_0 t) + x_2(t)\sin(2\pi F_0 t)$$

Dans cette réalisation les convertisseurs analogiques numériques sont situés en amont du dispositif.

Il est également connu dans l'état de la technique un système tel que décrit sur la figure 2. Ce système comporte un convertisseur analogique numérique 201, échantillonnant le signal à la fréquence Fe. Comme pour le système présenté figure 1 ce système comporte un filtre de Hilbert 101. Ce système comporte également un dispositif de retard 202, or ce dispositif doit présenter exactement les mêmes caractéristiques, en retard pur et en déphasages en bord de bande, qu'un filtre de Hilbert. En pratique, le dispositif de retard adopte une structure de filtre à réponse impulsionnelle finie équivalente à celle du filtre de Hilbert. Pour les applications de grande précision, l'implémentation consiste alors en deux filtres passe-bande capables de filtrer un signal à la fréquence d'échantillonnage $F_e$. Dans ce système x(n) correspond à $x_1(t)$ et y(n) correspond à $x_2(t)$.

La puissance de calcul disponible dans l'électronique associée au microsystème électromécanique est souvent limitée. On trouve généralement un réseau logique programmable comme par exemple un réseau de portes programmables connu également sous l'acronyme anglais de FPGA pour  « Field Programmable Gate-Array » ou un circuit intégré propre à une application connu sous l'acronyme anglais de ASIC pur « Application Specific Integrated Circuit ». Ces derniers sont souvent partagés fonctionnellement entre plusieurs microsystèmes électromécaniques. Or les filtres utilisés dans les systèmes connus dans l'état de la technique, présentés figure 1 et figure 2, sont très complexes et donc le nombre de portes (dans le cadre d'un FPGA) ou la puissance de calcul (dans le cadre d'un ASIC) nécessaire est élevé, en conséquence, le volume, la consommation et la dissipation thermique des dispositifs de traitement d'un signal connu dans l'état de la technique sont élevés.

La présente invention vise notamment à remédier à ces problèmes en proposant un système de traitement d'un signal reçu d'un microsystème électromécanique présentant une complexité calculatoire inférieure aux systèmes connus dans l'état de la technique.

Il est proposé selon un aspect de l'invention, un système de traitement d'un signal reçu d'un microsystème électromécanique comprenant, des moyens 301 d'échantillonnage, dudit signal reçu, à une fréquence d'échantillonnage $F_e$, des moyens 302 de décalage en fréquence du signal échantillonné, par multiplication du signal échantillonné par une fonction exponentielle complexe. Le système comprend également des moyens 303 de filtrage passe-bas du signal décalé en fréquence et des moyens 304 de sous-échantillonnage du signal filtré.

Le sous-échantillonnage ou décimation est le fait de ne garder d'un signal échantillonné seulement un échantillon sur N échantillons consécutifs, N étant le rapport de sous-échantillonnage.

Le système permet donc d'échantillonner et d'extraire un signal en provenance d'un microsystème électromécanique. Le signal en sortie du système proposé est équivalent au signal obtenu en utilisant un système connu. L'extraction des informations de mesures se fait alors de la même façon, par démodulation d'amplitude, de phase ou de fréquence, suivant la façon dont la mesure du microsystème électromécanique est transmise. En effet l'utilisation d'une transposition de fréquence consiste à multiplier le signal par $k$ racines de l'unité (les coefficients se déduisent les uns des autres de manière d'autant plus simple que $k$ est faible), alors que le FIR déphaseur dit de Hilbert est typiquement constitué de 2 FIR passe-bande à 128 coefficients.

De plus du fait de la simplification des filtres du système, le nombre de portes ou puissance de calcul nécessaire dans la mise en place de ce système est inférieur aux systèmes connus dans l'état de la technique. Ainsi ce système permet la réduction de volume, de consommation électrique, de dissipation thermique et donc le coût récurrent et non récurrent du système.

Un autre avantage du système de l'invention est que la latence durant les calculs est plus faible que dans les systèmes décrits dans l'état de la technique.

La fréquence d'échantillonnage est déterminée, au moment de la conception du système utilisant le procédé, entre autre à partir de la largeur de la bande d'étalement des fréquences $\pm\Delta F/2$ et de la fréquence centrale $F_0$, dudit signal reçu. Cette fréquence d'échantillonage est déterminée de telle sorte que $k$ soit sensiblement égale à ${F_e}/{F_0}$ (cette fréquence est choisie entre autre pour éviter les imperfections du filtre analogique anti-repliement en amont du convertisseur analogique numérique. Ces imperfections sont en particulier la dissymétrie de gain par rapport à la fréquence centrale $F_0$ et les ondulations dans la bande). Elle est aussi déterminée afin que $F_e > 2\left(F_0 + \frac{\Delta F}{2}\right)$, afin de respecter le critère de Shannon. Enfin $k$ est choisi de sorte que $F_e/k \geq \Delta F/2$, afin de pouvoir filtrer et décimer d'un facteur $k$ en respectant le critère de Shannon après le décalage du spectre de $-F_e/k$.

Avantageusement lesdits moyens de décalage sont adaptés pour multiplier ledit signal échantillonné par une fonction exponentielle complexe de fréquence déterminée à partir de ladite fréquence d'échantillonnage, de ladite largeur de la bande d'étalement des fréquences $\pm\Delta F/2$ et de ladite fréquence centrale $F_0$, dudit signal reçu

La fonction exponentielle complexe est de la forme $e^{j2F\pi F_d l}$ et dans cette expression $l$ désigne l'indice du signal échantillonné respectivement associé à une valeur complexe de l'expression et $F_d$ le décalage de fréquence souhaité.

Avantageusement lesdits moyens de filtrage sont adaptés pour utiliser un filtre passe-bas dont la fréquence de coupure est déterminée à partir de ladite fréquence d'échantillonnage, de ladite largeur de la bande d'étalement des fréquences $\pm\Delta F/2$ et de ladite fréquence centrale $F_0$, dudit signal reçu

Avantageusement lesdits moyens de sous-échantillonnage sont adaptés pour effectuer un sous-échantillonnage d'un rapport déterminée à partir de ladite fréquence d'échantillonnage, de ladite largeur de la bande d'étalement des fréquences $\pm\Delta F/2$ et de ladite fréquence centrale $F_0$, dudit signal reçu

Le sous-échantillonnage ou décimation d'un rapport N est le fait de ne garder d'un signal échantillonné seulement un d'échantillon sur N échantillons consécutifs.

Avantageusement, le procédé de traitement d'un signal reçu d'un microsystème électromécanique, comprend une étape de détermination d'une fréquence d'échantillonnage, une étape d'échantillonnage dudit signal reçu, cet échantillonnage étant réalisé suivant ladite fréquence d'échantillonnage, une étape de translation en fréquence dudit signal échantillonné, par multiplication dudit signal reçu par une fonction exponentielle complexe, une étape de filtrage passe-bas du signal décalé en fréquence et une étape de sous-échantillonnage dudit signal filtré.

L'invention sera mieux comprise et d'autres avantages apparaîtront à la lecture de la description détaillée faite à titre d'exemple non limitatif et à l'aide des figures parmi lesquelles :

- La figure 1 présente un premier système de traitement d'un signal de l'état de la technique
- La figure 2 présente un deuxième système de traitement d'un signal de l'état de la technique
- La figure 3 présente un mode de réalisation du système suivant un aspect de l'invention

Le système de traitement d'un signal occupant une bande de fréquence limitée $\pm \Delta F/2$ autour d'une fréquence centrale $F_0$, tel que présenté figure 3, comporte les dispositifs suivant.

La fréquence d'échantillonnage est déterminée au moment de la conception du système utilisant le procédé entre autre à partir de la largeur de la bande d'étalement des fréquences $\pm \Delta F/2$ et de la fréquence centrale $F_0$, dudit signal reçu. Cette fréquence d'échantillonage est déterminée de telle sorte que $k$ soit sensiblement égale à $F_e/F_0$ (cette fréquence est choisie entre autre pour éviter les imperfections du filtre analogique anti-repliement en amont du convertisseur analogique numérique. Ces imperfections sont en particulier la dissymétrie de gain par rapport à la fréquence centrale $F_0$ et les ondulations dans la bande). Elle est aussi déterminée afin que $F_e > 2\left(F_0 + \dfrac{\Delta F}{2}\right)$, afin de respecter le critère de Shannon. Enfin $k$ est choisi de sorte que $F_e/k \geq \Delta F/2$, afin de pouvoir filtrer et décimer d'un facteur $k$ en respectant le critère de Shannon après le décalage du spectre de $-F_e/k$.

Le système comporte également un dispositif 301 d'échantillonnage, à la fréquence $F_e$. Ce dispositif est généralement un convertisseur analogique numérique.

Le système comporte également un dispositif 302 de décalage en fréquence. Ce décalage en fréquence est réalisé en multipliant les échantillons indicés par l du signal échantillonné respectivement par la valeur complexe de l'expression $e^{j2\pi(F_e/k)l}$ et dans cette expression $l$ désigne l'indice du signal échantillonné respectivement associé à une valeur complexe de l'expression. Cette multiplication aura pour effet de décaler en fréquence le signal échantillonné de $F_e/k$.

Le système comporte de plus un dispositif 303 de filtrage passe-bas présentant un début de la bande atténuée qui est fixée à $F_e/k$. La fréquence de coupure est la fréquence pour laquelle le signal de sortie est atténué d'une valeur fixée généralement à 3dB, cette fréquence de coupure est choisie pour passer la bande utile du signal décalé ($F_0 - F_e/k \pm \Delta F/2$) et pour éviter une dissymétrie qui serait source de rectification dans le cas d'un accéléromètre sous vibrations. Il est par exemple possible d'utiliser un filtre passe-bas à taux d'ondulation constant (connu sous le nom anglais d'equiripple) appliqué sur chacune des composantes en quadrature.

Le système comporte ensuite un dispositif 304 de décimation d'un ratio k. La décimation consiste à ne conserver dans le signal uniquement un échantillon sur k.

Puisque le signal résultant du traitement proposé est équivalent au signal analytique que l'on aurait obtenu par les systèmes connus dans l'état de la technique en particulier ceux utilisant un filtre de Hilbert, les traitements pour extraire les informations, contenues dans le signal reçu du microsystème électromécanique, sont donc les mêmes. En particulier, les informations de module et de phase sont conservées. Ainsi, la mesure que le microsystème électromécanique a réalisée et qui est contenue dans la modulation d'amplitude, de fréquence ou de phase du signal, peut être extraite à partir des échantillons du signal complexe obtenu en sortie du système décrit dans cette invention.

De plus la solution proposée a permis de remplacer deux filtres passe-bande dont la fréquence centrale est de $F_0$, par un seul filtre passe-bas calculé à la fréquence de $F_e/k$. Le nombre de portes logiques nécessaires à la réalisation de ce système par rapport aux systèmes connus dans l'état de la technique a donc été divisé par 2k. De même, dans le cas d'une réalisation par un circuit dédié, la puissance de calcul nécessaire a été divisée par 2k.

**Revendications**

1. Système de traitement d'un signal reçu d'un microsystème électromécanique comprenant:

   - des moyens (301) d'échantillonnage, dudit signal reçu, à une fréquence d'échantillonnage ($F_e$)
   - des moyens (302) de décalage en fréquence dudit signal échantillonné, par multiplication dudit signal échantillonné par une fonction exponentielle complexe
   - des moyens (303) de filtrage passe-bas dudit signal décalé en fréquence
   - des moyens (304) de sous-échantillonnage dudit signal filtré,

2. Système de traitement d'un signal selon la revendication 1 dans lequel lesdits moyens de décalage sont adaptés pour multiplier ledit signal échantillonné par une fonction exponentielle complexe de fréquence déterminée à partir de ladite fréquence d'échantillonnage, de ladite largeur de la bande d'étalement des fréquences ($\pm \Delta F/2$) et de ladite fréquence centrale ($F_0$), dudit signal reçu

3. Système de traitement d'un signal selon la revendication 1 ou 2 dans lequel lesdits moyens de filtrage sont adaptés pour utiliser un filtre passe-bas dont la fréquence de coupure est déterminée à partir de ladite fréquence d'échantillonnage, de ladite largeur de la bande d'étalement des fréquences ($\pm\Delta F/2$) et de ladite fréquence centrale ($F_0$) dudit signal reçu

4. Système de traitement d'un signal selon l'une des revendications 1 à 3 dans lequel lesdits moyens de décimation sont adaptés pour effectuer une décimation d'un rapport déterminé à partir de ladite fréquence d'échantillonnage, de ladite largeur de la bande d'étalement des fréquences ($\pm\Delta F/2$) et de ladite fréquence centrale ($F_0$) dudit signal reçu

5. Procédé de traitement d'un signal reçu d'un microsystème électromécanique, comprenant:

    - une étape d'échantillonnage dudit signal reçu, cet échantillonnage étant réalisé suivant ladite fréquence d'échantillonnage
    - une étape de translation en fréquence dudit signal échantillonné, par multiplication dudit signal reçu par une fonction exponentielle complexe
    - une étape de filtrage passe-bas du signal décalé en fréquence
    - une étape de sous-échantillonnage dudit signal filtré

FIG.1

FIG.2

FIG.3

Europäisches
Patentamt

European
Patent Office

Office européen
des brevets

# RAPPORT DE RECHERCHE EUROPEENNE

Numéro de la demande

EP 13 16 1877

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | Lane Gearle Brooks: "Amplitude and Frequency Demodulation Controller for MEMS Accelerometer", Master Thesis at Department of Electrical Engineering and Computer Science, MIT , février 2001 (2001-02), pages 1-122, XP055045498, Extrait de l'Internet: URL:http://brooks.nu/~lane/pubs/AmplAndFreqDemod.pdf [extrait le 2012-11-23] * pages 15, 38 and 46 * ----- | 1-5 | INV. G06F17/14 G01C21/16 |
| Y | Robert Schober: "Chapter 3: Characterization of Communication Signals and Systems", Department of Electrical and Computer Engineering at the University of British Columbia , 19 avril 2008 (2008-04-19), pages 63-150, XP055045490, Extrait de l'Internet: URL:http://web.archive.org/web/20080419043848/http://courses.ece.ubc.ca/564/chapter3.pdf [extrait le 2012-11-23] * page 63 - page 64 * | 1-5 | |
| L | -&  "Internet Wayback Machine Information for Chapter 3: Characterization of Communication Signals and Systems", , 19 avril 2008 (2008-04-19), XP055045497, Extrait de l'Internet: URL:http://wayback.archive.org/web/*/http://courses.ece.ubc.ca/564/chapter3.pdf [extrait le 2012-11-23] * le document en entier * | 1-5 | DOMAINES TECHNIQUES RECHERCHES (IPC) G06F G01C |

-/--

Le présent rapport a été établi pour toutes les revendications

| Lieu de la recherche | Date d'achèvement de la recherche | Examinateur |
|---|---|---|
| Berlin | 19 avril 2013 | Huguet Serra, G |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons
 
& : membre de la même famille, document correspondant

EPO FORM 1503 03.82 (P04C02)

Europäisches
Patentamt

European
Patent Office

Office européen
des brevets

**RAPPORT DE RECHERCHE EUROPEENNE**

Numéro de la demande

EP 13 16 1877

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| L | -& "Internet Wayback Machine Information of webpage containing link to Chapter 3: Characterization of Communication Signals and Systems", <br><br> 23 mars 2008 (2008-03-23), XP055045927, Extrait de l'Internet: URL:http://web.archive.org/web/20080323174 116/http://courses.ece.ubc.ca/564/ [extrait le 2012-11-28] * le document en entier * | 1-5 | |
| A | Alan V. Oppenheim ET AL: "Discrete-Time Signal Processing, Second Edition" In: "Discrete-Time Signal Processing, Second Edition", 1999, Prentice Hall International, Inc., Upper Saddle River, New Jersey 07458, XP055045538, pages 796-801, * page 796 - page 801 * | 1-5 | |
| A | Peter Mathys: "Lab 10: Real Bandpass and Complex Lowpass Signals, QAM, General BPFs", Department of Electrical, Computer, and Energy Engineering at the University of Colorado at Boulder <br><br> 7 novembre 2011 (2011-11-07), pages 1-20, XP055045500, Extrait de l'Internet: URL:http://ecee.colorado.edu/~mathys/ecen4 652/pdf/lab10.pdf [extrait le 2012-11-23] * page 3 - page 4 * | 1-5 | |

DOMAINES TECHNIQUES RECHERCHES (IPC)

-/--

Le présent rapport a été établi pour toutes les revendications

| Lieu de la recherche | Date d'achèvement de la recherche | Examinateur |
|---|---|---|
| Berlin | 19 avril 2013 | Huguet Serra, G |

EPO FORM 1503 03.82 (P04C02)

Europäisches
Patentamt

European
Patent Office

Office européen
des brevets

# RAPPORT DE RECHERCHE EUROPEENNE

Numéro de la demande

EP 13 16 1877

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| L | -& "Webpage with link to Lab 10: Real Bandpass and Complex Lowpass Signals, QAM, General BPFs", , 7 novembre 2011 (2011-11-07), XP055045929, Extrait de l'Internet: URL:http://ecee.colorado.edu/~mathys/ecen4652/lab10/index.html [extrait le 2012-11-28] * le document en entier * ----- | 1-5 | |

DOMAINES TECHNIQUES
RECHERCHES (IPC)

Le présent rapport a été établi pour toutes les revendications

| Lieu de la recherche | Date d'achèvement de la recherche | Examinateur |
|---|---|---|
| Berlin | 19 avril 2013 | Huguet Serra, G |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)